# EUROPEAN PATENT APPLICATION

(11) **EP 2 221 725 A1**
(43) Date of publication of application: **25.08.2010**
(21) Application number: 09153156.6
(22) Date of filing: 19.02.2009
(51) Int. Cl.: G06F 11/36

(54) **Validator for validating conformity of a software configuration**

(71) Applicant: Mecel Aktiebolag, 400 20 Göteborg (SE)
(72) Inventor: Fritzson, Mathias, 422 57, HISINGS BACKA (SE); Sivencrona, Håkan, 432 75, TRÄSLÖVSLÄGE (SE)
(74) Representative: Edlund, Fabian

(57) **Abstract**

A validator (1) for validating conformity of a software configuration (10, 100) with a predefined specification (11), which validator (1) comprises an acquisition interface (8) for obtaining the software configuration (10), a storage (12) for storing a set of predefined rules defined by restrictions associated with configuration parameters and dependencies of the parameters derived from the predefined specification (11), and a software rule parser (13). The rule parser (13) is adapted to perform a conformity examination by applying the set of rules on content of the configuration (100), thereby enabling automated detection of inconsistencies with the specification (11 ) prior to deriving a piece of software (7) from the configuration (10).
The present invention introduces the ability to in an efficient manner and at an early stage of a software development cycle, identify possible mismatches between a configuration of a piece of software and a specification with which it should comply.

## Description

### Technical Field of the Invention

The present invention relates to a validator for validating conformity of a software configuration with a predefined specification.

### Background Art

For each year, car makers tend to implement increasing amounts of functionality into newly developed vehicles. Accordingly, complex electric and electronic functions are often distributed across the vehicle in numerous electronic control units (ECUs); each providing its specific functionality. In order for these ECUs to be able to communicate with one another, standard network protocols adapted for embedded applications are often utilized, such as e.g. CAN, LIN and FlexRay. A large portion of the implemented basic functionality, e.g. network management, is hence the same from one car maker to another. Traditionally however, vehicle manufacturers have been developing their own technical solutions. With the constantly increasing functional scope of automotive electronics, this approach is about to be altered.

In order to cope with the tremendous increase of implemented functionality, cooperation between semiconductor industries, tools and software vendors as well as car makers have been initiated. One such cooperation is the AUTOSAR (Automotive Open System Architecture) development partnership, focusing on providing a significant reduction of structural complexity by the means of an industry-wide standardized software infrastructure. The objective for AUTOSAR is hence to specify an open standard for the software architecture and software interfaces for the most common functionality in ECUs, thereby increasing the software quality and exchangeability. Subsequently, by standardizing basic software and provide interfaces onto which further application software may be built, vehicle manufacturers and ECU suppliers may rather than spending time developing standard software, focus on integrations and application development distinguishing one car maker from the other.

Nonetheless, while a standard such as AUTOSAR is a welcome initiative, compliance of the embedded ECU with the software as well as hardware architecture surrounding it remains of outermost importance. During the development and lifetime of a vehicle platform, the requirements imposed on the embedded ECU software, by e.g. system and/or ECU specific specifications, are likely to change over time. Subsequently, the ECU software may be targeted for changes concerning e.g. connected I/Os or peripherals. Due to restrictions within embedded systems, such as e.g. safety regulations and limited memory and hardware resources, ECU software is usually not designed to be self configurable. Consequently, with a change in for instance the application features, operating system or peripheral hardware, the ECU software is likely requested to be updated; each development cycle requiring an extensive amount of manual work and time to update the software to be correctly and safely configured.

Naturally there has been a strive for reducing the efforts associated with each of the software development cycles, and DE102006059631 for instance discloses an approach according to which examination of the compliance of a software product with a predetermined architecture is performed . A tool is provided, which is adapted to in an automated manner guarantee that specific characteristics of the software product are reached. Although the described solution contributes to making a software development cycle more effective, DE102006059631 still leaves room for improvements related to a more efficient validation.

### General disclosure of the Invention

It is therefore an object of the present invention to provide a solution according to which the above-related drawbacks are eliminated wholly or at least partly.

According to a first aspect of the invention, this may be achieved by a validator for validating conformity of a software configuration with a predefined specification. The validator comprises an acquisition interface for obtaining the software configuration, a storage for storing a set of predefined rules defined by restrictions associated with configuration parameters and dependencies of the parameters derived from the predefined specification, and a software rule parser. The rule parser is adapted to perform a conformity examination by applying the set of rules on content of the configuration, thereby enabling automated detection of inconsistencies with the specification prior to deriving a piece of software from the configuration.

Consequently, the present invention introduces the ability to identify in an efficient manner and at an early stage of a software development cycle, possible mismatches between a configuration of a piece of software and a specification with which it should comply. Thereby, errors prone to occur due to for instance the complexity of a system which the specification reflects, may be identified already at the stage of validating the configuration, i.e. prior to the piece of software being derived from the configuration, rather than being identified during validation of the piece of software. Validating the configuration as suggested by the present invention thus contributes to guarantee the behavior of the subsequent piece of software even before it is generated. Furthermore, the automated manner in which the validation is performed by utilizing a rule parser provides shorter software development cycles, as once rules defined by restrictions associated with configuration parameters and dependencies of the parameters are derived from the specification, mismatches may be identified in a matter of seconds or minutes rather than days or even weeks. Additionally, utilizing the proposed validator may contribute to a decreased risk of errors committed by humans as well as the software development cycle being less cumbersome, since a full software development cycle with extensive testing of the piece of software may be reduced.

Similar to the validator of the present invention, known code generators as well as configuration editors may, to some extent, provide validation of the configuration. However, these known code generators appear to only verify requirements which need to be fulfilled for the piece of software to compile, meanwhile validation performed by these known configuration editors only seem to involve checking whether or not a configuration fulfills a corresponding definition. Thus, unlike the introduced validator of the present invention, neither known generators nor editors support validation of restrictions associated with configuration parameters and dependencies of the parameters derived from a predefined specification, which specification in addition to imposing e.g. functional requirements on the configuration may impose e.g. overall system requirements. Consequently, according to the present invention, rules may be defined based on derived arbitrary restrictions from a specification applicable for the configuration and subsequent piece of software, which specification rather than being based on a single document may comprise restrictions imposed by e.g. functional requirements as well as requirements imposed by e.g. standard system specifications. The latter enables for validation of e.g. how a message is sent through different software modules of a network stack. Subsequently, by defining each rule as comprising a specific parameter restriction in line with the restrictions imposed by the specification, each rule may thereby during conformity examination of the configuration, validate whether or not the corresponding parameter restriction is fulfilled. In order to avoid complex rule dependencies, rules may be defined in a manner according to which one rule is independent of another. Furthermore, where needed, several rules may each express a condition involving the same parameter.

In order to distinguish non-fulfillment of a parameter restriction expressed by a rule, i.e. a mismatch between the configuration and specification, the validator may be adapted to trigger an indication should a parameter restriction expressed by one of the rules not be met during the conformity examination. Thus, by defining a rule to comprise e.g. a logical or arithmetic expression derived from the specification and associating a consequence therewith such as an error indication describing the inconsistency, the consequence may be executed in case of an encountered mismatch.

Additionally, in order to capture these encountered inconsistencies, the validator may furthermore comprise a result interface for providing a conformity result based on an outcome of the conformity examination, which outcome comprises the indication. Thereby, the result interface provides generation of a result reflecting the outcome of the validation which for instance may be displayed on a screen or stored in a data file for review.

The format on which a configuration is provided, e.g. from a configuration editor, is commonly XML (Extensible Markup Language). However, a software rule parser based on for instance Drools and Prolog, allowing decisions to be made based on predefined known facts and rules, commonly rather supports an object based structure. Accordingly, the acquisition interface may be adapted to convert an original format of the configuration to an adjusted format suitable for the rule parser. Thus, by converting the format of the configuration, the content may in the adjusted format have a structure, e.g. the content may be represented by an object structure, based on which rules may be expressed and subsequently applied by e.g. known rule parsers. Furthermore, with the ability of conversion, rules may be composed independently of the original format of the configuration. The acquisition interface may for instance, although not necessarily, be based on DOM (Document Object Model), JAXB (Java Architecture for XML Binding) or Mecel Picea Workbench developed by the applicant for performing the conversion from e.g. XML to e.g. Java objects, whereby rather than developing an acquisition interface from scratch, known alternatives may be utilized.

In order for the rule parser to in a robust manner apply the rules on content of the configuration, the validator may furthermore comprise a memory area, such as e.g. a database, adapted to store the content. Thereby, the validator is adapted to harmonize with some known rule parsers, which may require that content on which rules are to be applied need to be stored in e.g. a database prior to a conformity examination. Note however that the memory area for other embodiments may be superfluous, in that the rule parser may be able to apply rules on the content without the content being stored prior thereto.

Furthermore, the rule parser may be based on a business rule management system (BRMS), e.g. known Drools or Prolog. As such a rule parser may allow for storing of new facts to the database and execution of generic e.g. Java code in the consequences, the content of the configuration may hence be stored in the memory area and indications comprising descriptions of inconsistencies may be generated in an efficient manner. Additionally, such a rule parser commonly supports a plurality of languages for writing the rules, such as one or several of e.g. Java, MVEL, Python and Groovy, the e.g. engineer composing the rules may choose a language of his liking.

According to one embodiment, the predefined specification may be based on software and/or hardware conditions defined by a system for which the piece of software is intended. Thereby, the specification defines conditions and subsequently rules applicable for the intended use of the piece of software, and may thus comprise restrictions associated with e.g. functional requirements associated with an application software with which the piece of software is intended to be integrated, as well as restriction associated with e.g. the overall system in which the piece of software is intended to be implemented. Furthermore, the system may be an automotive system comprising an electronic control unit (ECU) for which the piece of software is intended. Accordingly, the specification providing the restrictions is related to an automotive environment, comprising restrictions associated with the specific ECU for which the piece of software is intended. Additionally, although not necessarily, the system may comply with standards based on AUTOSAR (Automotive Open System Architecture), to thereby harmonize with standards widely accepted within the automotive industry.

Furthermore, the piece of software may be a basic software supporting one or a combination of application interfaces, hardware interfaces, drivers, and system, memory and communication services. Accordingly, the piece of software derived from the configuration may concern a basic software layer providing basic support to an application software with which it is intended to be integrated, rather than concern an application software providing functionality related content. In the case of a specification requiring compliance with AUTOSAR, the piece of software may for instance be any one or a combination of the available Basic Software Modules or the RTE (Runtime Environment).

According to a second aspect, a method of validating conformity of a software configuration with a predefined specification is provided. The method comprises obtaining the configuration by means of an acquisition interface, storing a set of predefined rules in a storage, which rules are defined by restrictions associated with configuration parameters and dependencies of the parameters derived from the predefined specification, and performing a conformity examination by utilizing a software rule parser to apply the set of rules on content of the configuration, thereby enabling automated detection of inconsistencies with the specification prior to deriving a piece of software from the configuration.

With such a method, similar effects as described in conjunction with the first aspect of the invention may be accomplished.

According to a third aspect, a computer program product is provided comprising a computer readable medium having stored thereon computer program means for validating conformity of a software configuration with a predefined specification. The computer program product comprises code for obtaining the configuration by means of an acquisition interface, code for storing a set of predefined rules in a storage, which rules are defined by restrictions associated with configuration parameters and dependencies of the parameters derived from the predefined specification, and code for performing a conformity examination by utilizing a software rule parser to apply the set of rules on content of the configuration, thereby enabling automated detection of inconsistencies with the specification prior to deriving a piece of software from the configuration.

The computer program product of the third aspect may also provide similar effects as described in conjunction with the first aspect of the invention.

Additionally, a computer program is provided, for performing the steps of the method when the program is executed in a computer.

Other aspects, benefits and advantageous features of the invention will be apparent from the following description and claims.

### Brief Description of the Drawings

These and other aspects of the present invention will now be described in more detail, with reference to the appended drawings showing currently preferred embodiments of the invention, wherein:
Figure 1 schematically illustrates an exemplifying overview of an operating environment for a validator for validating conformity of a software configuration according to an embodiment of the present invention;
Figure 2 shows the exemplifying validator of Figure 1 in greater detail; and
Figure 3 illustrates exemplifying steps for validating conformity of a software configuration utilizing the validator of Figure 1.

### Detailed Description of the Preferred Embodiments of the Invention

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and fully convey the scope of the invention to the skilled addressee. Like reference characters refer to like elements throughout.

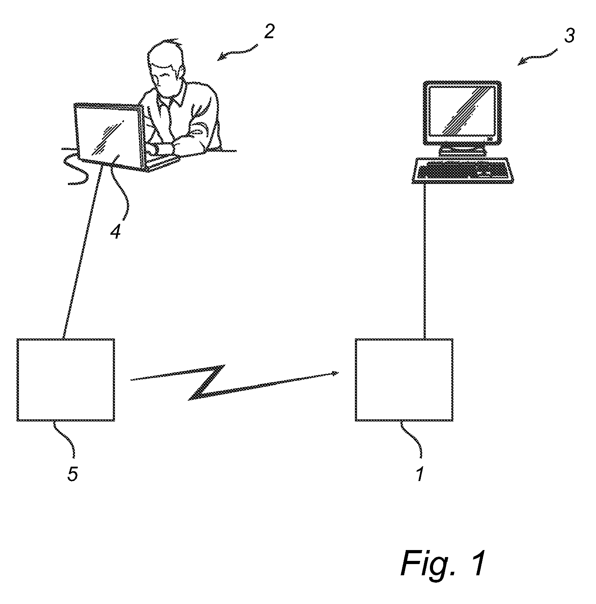

Figure 1 schematically illustrates an exemplifying overview of an operating environment for a validator 1for validating conformity of a software configuration according to an embodiment of the present invention. Here, an application software development company 2 intends to develop an application software for an ECU (electronic control unit) which is to be integrated with a system within a vehicle. Here, furthermore, the system is intended to harmonize with AUTOSAR (Automotive Open System Architecture), and the application software is hence bound to comply with the requirements imposed therefrom. AUTOSAR follows a layered architecture concept, and the total software solution is divided into three layers, known as Application software, Runtime Environment (RTE) and Basic Software (BSW). All the functionalities are kept under the application software module, the RTE acts as a virtual function bus for an ECU and messages are transferred using the BSW. Although software related to the shown embodiment is intended to harmonize with AUTOSAR, the invention is not restricted thereto; other options are naturally covered within the scope, such as for instance the software complying with alternative standards or even software not bound to harmonize with any standard at all.

During software development, many software development cycles are commonly needed before a final version is reached. Consequently, the application software development company 2 may be bound to update and test software in a plurality of development cycles, and furthermore prior to each delivery guarantee that the behavior of the updated software is in accordance with existing requirements. Here, in the described embodiment, the application software development company 2 may additionally need to rely on a basic software development company 3 developing, testing and delivering one or several pieces of basic software intended to be integrated with the application software to be developed by the application software development company 2. A piece of basic software is for instance a software supporting one or a combination of application interfaces (such as RTE), hardware interfaces, drivers, and system, memory and communication services. Furthermore, a basic software may be a standard software module or RTE in accordance with AUTOSAR. Although the application software and basic software here are shown to be intended to be developed by different companies 2, 3, the invention is not restricted thereto; a single company may likewise be suited to develop both the first and the latter. Furthermore, note that the invention not is restricted to the combination of an application and basic software; on the contrary, only one of the two may likewise be concerned, or even other types of software not at all associated with the automotive industry.

In order to prepare for software updates related to a software development cycle, the application software development company 2 may utilize a configuration editor 4. The configuration editor 4 may assist in allowing e.g. an engineer to provide input to a software configuration from which a software subsequently is intended to be derived. It should be emphasized, however, that the process of generating software from a configuration is beyond the scope of the present invention, and is consequently not discussed herein.

In order to inform the basic software development company 3 of updates needed to be implemented in a basic software, the application software development company 2 may utilize a web interface 5. Via the web interface 5, an updated configuration may be provided from which the basic software subsequently may be derived. Note that use of the configuration editor 4 as well as the web interface 5 is optional; a configuration associated with the basic software intended to be supplied from the basic software development company 3, may likewise be updated in other known manners and furthermore provided to the software development company 3 by other means, such as for instance via one or a combination of an ftp server, email, CD, DVD and memory stick.

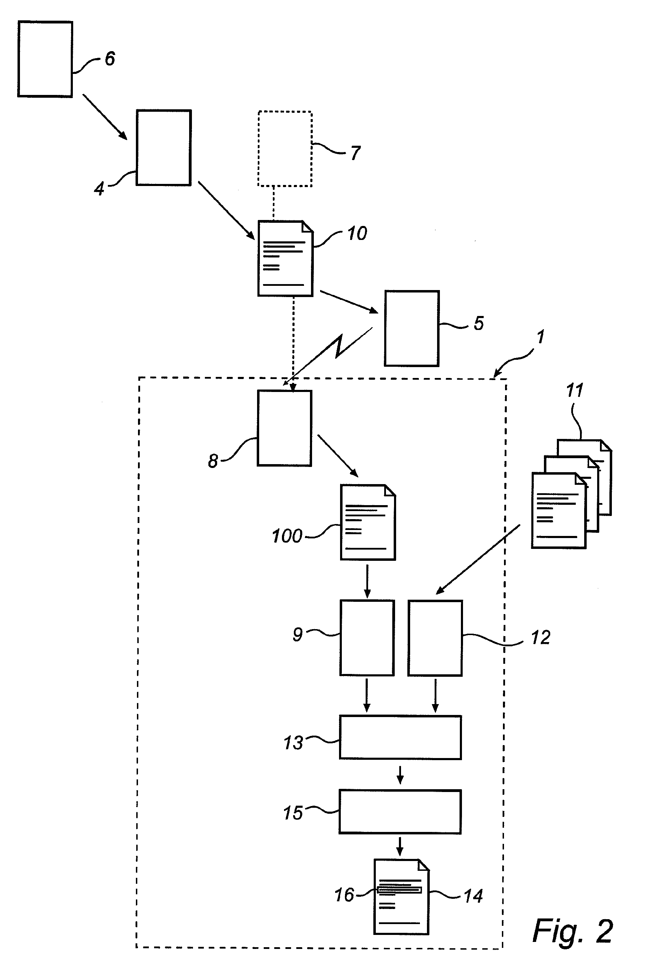

The validator 1 handling a configuration from which a basic software may subsequently be derived, will now be described in greater detail with reference to Figure 2. It should be emphasized that the validator 1 not necessarily needs to be implemented at the basic software development company 3, but likewise may be implemented anywhere else considered suitable, for instance at the application software development company 2. Furthermore, according to an another embodiment, the validator 1 may alternatively be integrated with the configuration editor 4.

In Figure 2, input provided to a configuration 10 is denoted with reference number 6, and may comprise for instance adjustments to parameters related to a piece of software 7 intended to subsequently be derived from the configuration 10. In order to obtain the configuration 10, the validator 1 may be provided with an acquisition interface 8, which may be a software and/or hardware interface. The acquisition interface 8 may be developed to be dedicated to foremost perform the tasks of obtaining and, if applicable, converting the original format of the configuration 10 to an adjusted format 100, or may alternatively or additionally be based on known tools such as DOM (Document Object Model), JAXB (Java Architecture for XML Binding) or Mecel Picea Workbench developed by the applicant.

In the illustrated embodiment, the configuration 10 provided to the acquisition interface 8 is of XML (Extensible Markup Language) format, as this is commonly the authentic case. Below is a part of an exemplifying configuration of XML format given, followed by an accompanying definition:

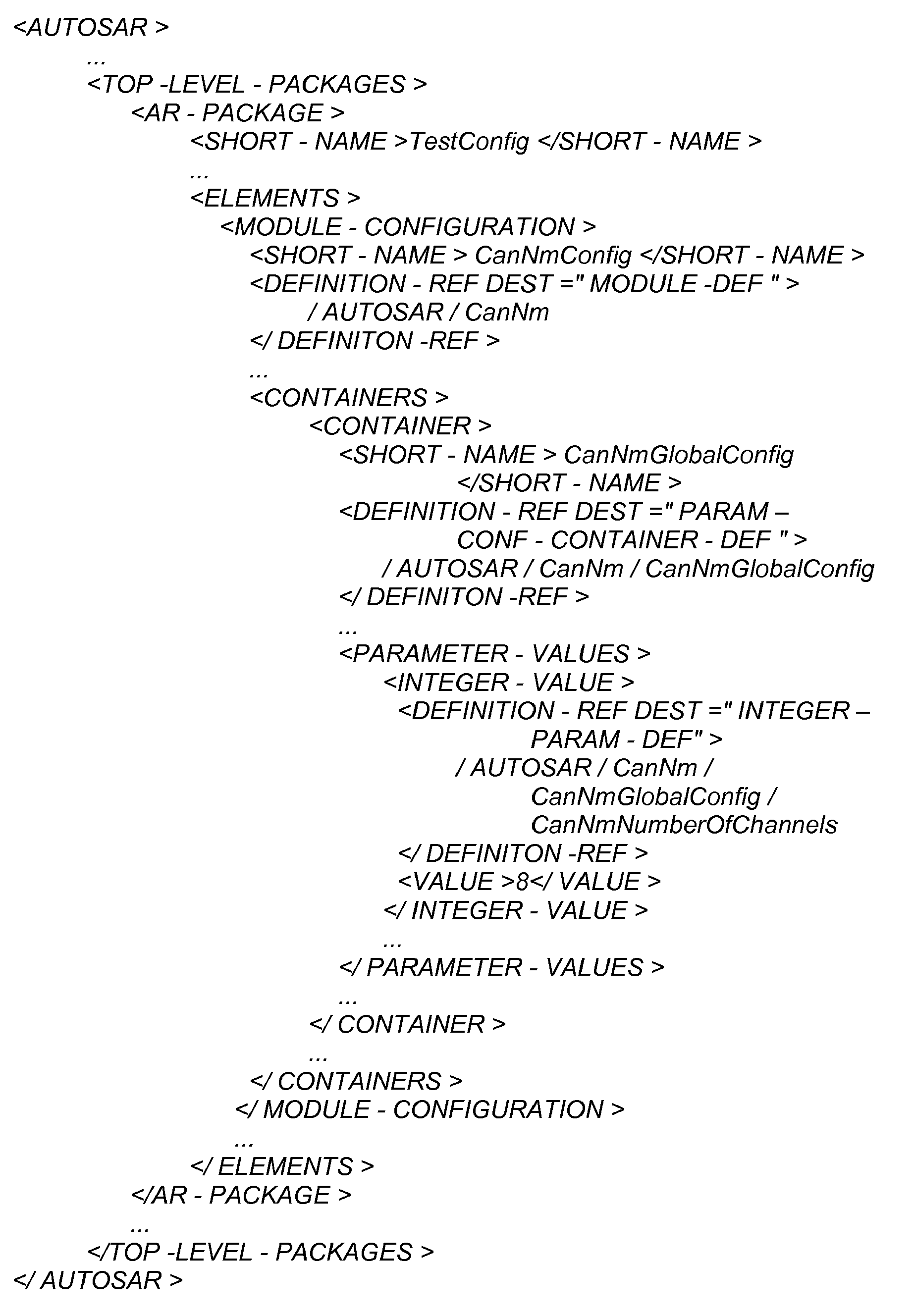

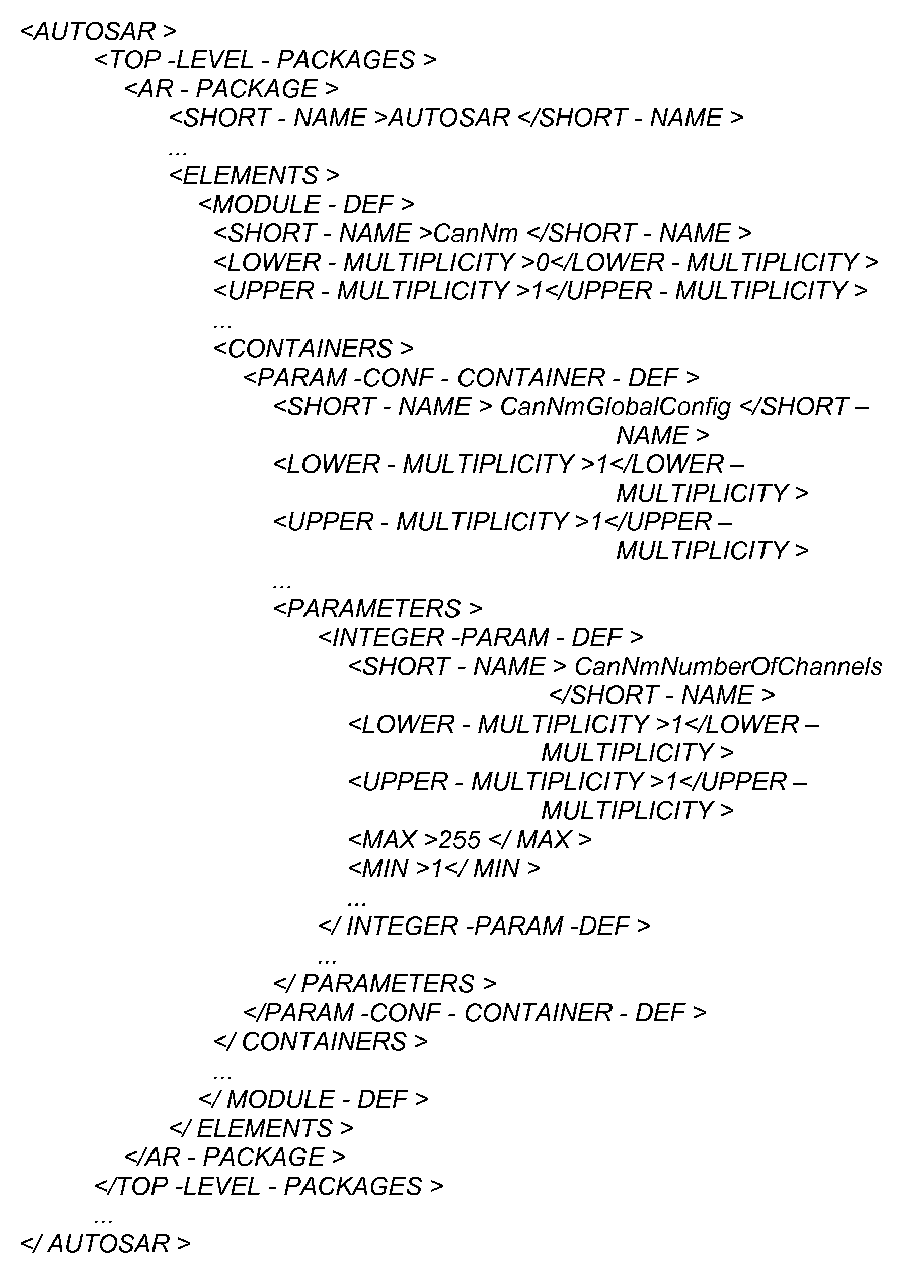

The acquisition interface 8 in the shown embodiment is, however, not restricted to only handle configuration formats 10 of XML; any arbitrary format is likewise covered within the scope.

As insinuated in the foregoing, the shown acquisition interface 8 is adapted to convert the original format of the configuration 10 to an adjusted preferred format 100. Here, an object structure is preferred, and content of the configuration 100 may hence after conversion be represented by objects, for instance Java objects. The validator 1 furthermore comprises a memory area 9, for instance represented by a database, in which the objects 100 may be stored.

As the foremost intention of the validator 1 is to validate conformity, there obviously needs to be something againts which the configuration 10 may be compared. To that end, a predefined specification 11 may constitute a basis from which a set of predefined rules, defined by restrictions associated with configuration parameters and dependencies of the parameters, may be derived. The predefined specification 11 may comprise a plurality of specifications and circumstances imposing restrictions on the piece of software 7 and hence the configuration 10, 100, and may for instance comprise software and/or hardware conditions defined by the system for which the piece of software 7 is intended. The specification 11 may comprise restrictions associated with the design of the configuration 10, 100 as well as dependencies between parameters included in the software; the conformity of which needs to be guaranteed. Here, due to the piece of software 7 being a basic software module intended for integration with an application software to be provided in an ECU being part of an automotive system, the predefined specification 11 may comprise restrictions imposed by at least the AUTOSAR standard, restrictions specific for the ECU, as well as restrictions associated with the functionality of the application software. It is to be noted that the restrictions are likely to alter during development and lifetime of e.g. a vehicle platform, why the predefined specification 11 thus may have changed from one development cycle to the next. It should also be emphasized that the predefined specification 11 may comprise restrictions based on other specifications than those stated in the foregoing; the predefined specification may for instance comprise any generic specification or input applicable for the configuration 10, 100 and/or piece of software 7.

A rule may reflect interpreted restrictions from the specification 11, and comprise a for instance logical or arithmetic expression related to a parameter. Each rule may furthermore be associated with a consequence, which when the rule is not met, may be executed. Such a consequence may for instance involve triggering of an indication 16 furthermore preferably comprising a description of the mismatch at hand. The validator 1 may comprise a storage 12, in which the set of predefined rules derived from the predefined specification 11 may be stored.

In the following, a few exemplifying rules composed to examine conformity of the configuration 10, 100 with the specification 11 will be described. Here, *BooleanValue* is a Java class, *definitionReference* links to the method *getDefinitionReference()* in this class, *value* links in a similar manner to *getvalue(),* and "a :" defines the variable "a" of the parameter matched by means of filtering on the right side of the *"a:"* The first exemplifying rule below shows how the parameters *CanNMPassiveModeEnabled* and *NmPassiveModeEnabled* must be equal, and how a consequence will be executed should the rule not be met during a conformity examination.

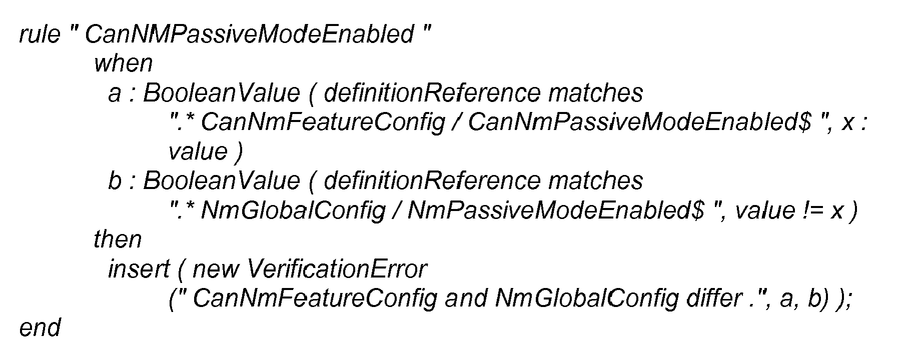

The second exemplifying rule below uses references to check parameter dependencies. Here, *ResolvedLocalReference* comprises references to the object corresponding to a container to which the reference points. The retrieved parameter is then used to define in which part of the configuration 100 another parameter is selected, which is achieved with assignment of variable *b.*

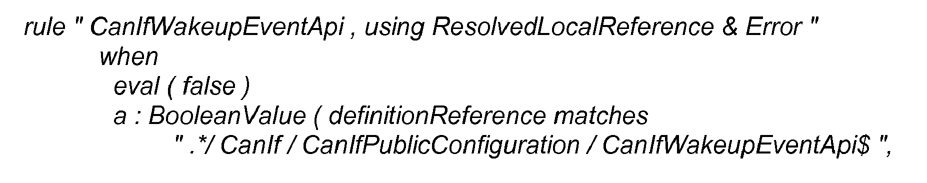

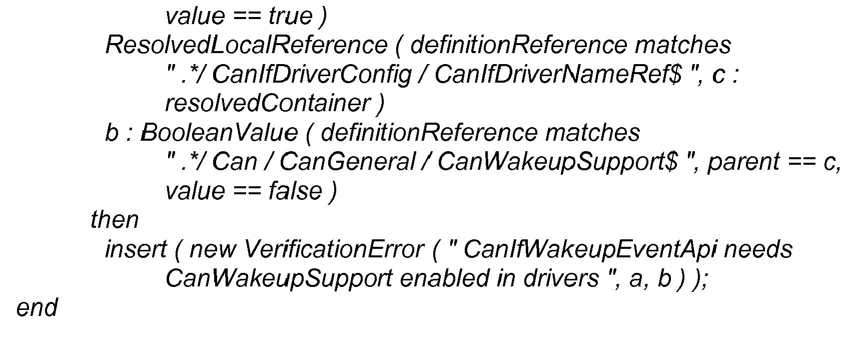

The third exemplifying rule below shows how dependencies via data paths may be handled between software modules in an exemplifying communication stack. All existing data paths in a configuration 10 may be stored according to a PDU (protocol data unit) path structure, which supports validation of parameters comprised in software modules which are present in the data paths. Here, the first software module in a data path is restricted to be "Com", and should that not be the case, then "Tp" is not allowed to exist in the same data path.

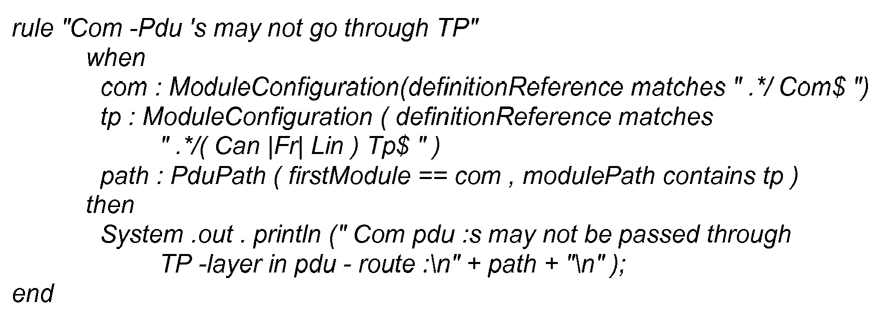

Furthermore, rules may comprise expressions enabling the configuration 100 to be stored to the storage 12. Accordingly, a rule in line with the exemplifying rule below may, when recursively being applied on the configuration 10, result in the configuration 100 being stored in the e.g. database 12.

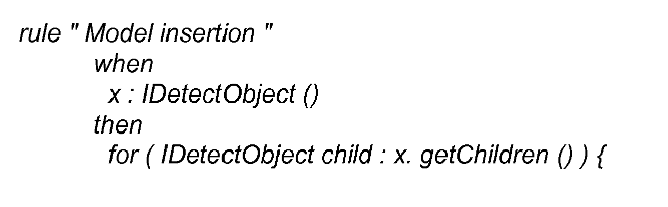

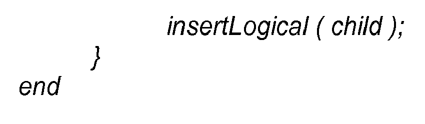

Consequently, the memory area 9 and the storage 12 may both be represented by the one and same database, which may be associated with a software rule parser 13 adapted to be used to perform the conformity examination. In order to comply with the rule parser 13 and facilitate for the rules to be applied on the configuration 100, the acquisition interface 8 is preferably, although not necessarily, adapted to after conversion of the original format of the configuration 10, provide an adjusted format 100 suitable for the rule parser 13. The rule parser 13 may be developed to be dedicated to foremost perform the task of performing a conformity examination by applying the set of rules on the content of the configuration 100, or may alternatively or additionally be based on available tools such as for instance a rule management system such as a business rule management system (BRMS), e.g. known Drools or Prolog, or Schematron.

In order to in a convenient manner provide a conformity result 14 based on an outcome of a conformity examination, the validator of Figure 2 may furthermore comprise a result interface 15. The result interface 15 may be a software and/or hardware interface, and may enable the conformity result 14 to for instance be presented on a display or be stored in a file. The outcome may comprise previously mentioned indications 16 adapted to be triggered as consequences in case of corresponding rules not being met during the conformity examination.

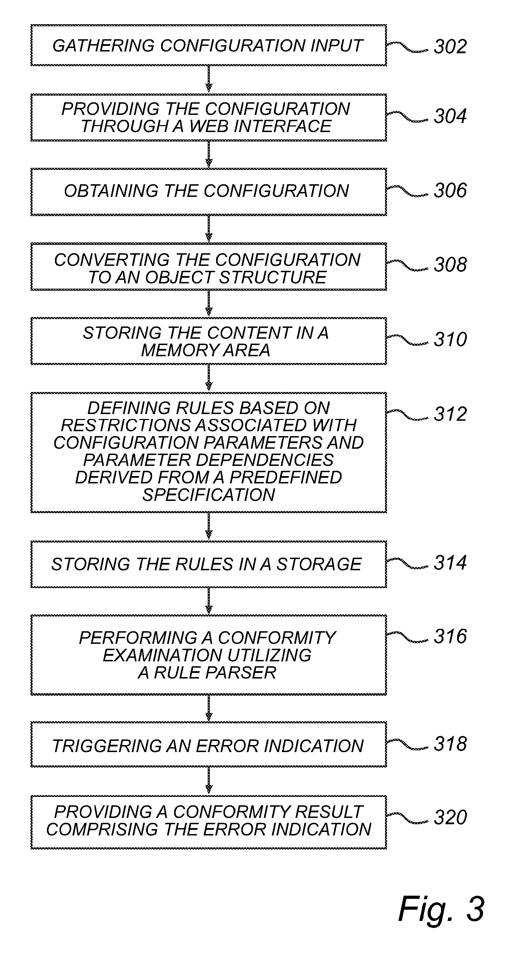

An exemplifying process for validating conformity of the configuration 10 with the predefined specification 11 will now be described with reference to Figure 3, in conjunction with Figures 1 and 2. It should be emphasized that the following steps not necessarily need to be performed in the order shown.

In a first step 302, the configuration input 6 may be gathered, for instance by the configuration editor 4. Then, in step 304, the resulting configuration 10 may be provided via the web interface 5 to be obtained by the acquisition interface 8 in step 306. It should once again be emphasized that the validator 1 not necessarily is dependent on the manner in which the configuration 10 is handled prior to being obtained by the acquisition interface 8, why the steps 304, 306 covering gathering and provision of the configuration 10, as well as the shown configuration editor 4 and web interface 5, for some embodiments may be considered as optional.

In a next step 308, the original format of the configuration 10 is converted to the adjusted format 100, for instance an object structure, preferably suitable for the rule parser 13. Then, in step 310, the content 100 is stored in the memory area 9.

In step 312, the rules are defined based on the restrictions associated with the configuration parameters and dependencies of the parameters derived from the predefined specification 11. The rules may be derived from the predefined specification 11 by e.g. one or several engineers interpreting the content of the predefined specification 11 into rules comprising restrictions associated with configuration parameters and dependencies of the parameters. The rules may be written in any arbitrary language readable by a computer, such as for instance in Java, MVEL, Python or Groovy. The choice of language in which the rules are written preferably harmonizes with characteristics of the software rule parser 13.

Next, in step 314, the rules may be stored in the storage 12. The rules may be derived and stored in the storage 12 prior to or even during a development cycle, e.g. whenever the predefined specification 11 imposes new changes on the rules. Note that it may be preferred to perform these last steps 312, 314 prior to the previously mentioned steps 302-310, such that the rules may be derived and defined from the specification 11 and stored in the storage 12 prior to the acquisition interface 8 obtaining the configuration 10.

In step 316, the conformity examination may be performed by utilizing the rule parser 13 to apply the set of rules on content of the configuration 100, to thereby enable automated detection of inconsistencies with the predefined specification 11 prior to the piece of software 7 being derived from the configuration 10. Should an inconsistency be identified during the conformity examination, i.e. a rule not be met as the rule parser 13 applies rules on the configuration content 100, an error indication 16 associated with the corresponding rule may, in step 318, be generated.

Next, in step 320, the conformity result 14 may be provided, for instance via the result interface 15.

Thereby exemplifying steps of a process and an exemplifying validator 1 in accordance with an embodiment of the present invention have been shown, which provide the ability to in an efficient manner and at an early stage of a software development cycle identify possible mismatches between a configuration 10, 100 of a piece of software 7 and a specification 11 with which it should comply.

The present inventive concept has been described by way of example, and the person skilled in the art realizes that the present invention by no means is limited to the preferred embodiments described above. It should for instance be emphasized that a basic sofware generated from the above described configuration additionally may comprise a static software part not influenced by the configuration, which on the contrary rather contribute to restricting the configuration in that restrictions therefrom may be comprised in the predefined specification.

It should furthermore be obvious that the devices, elements etc. illustrated in the drawings, are not drawn according to scale.

## Claims

1. A validator (1) for validating conformity of a software configuration (10, 100) with a predefined specification (11), which validator (1) comprises:
an acquisition interface (8) for obtaining said software configuration (10);
a storage (12) for storing a set of predefined rules defined by restrictions associated with configuration parameters and dependencies of said parameters derived from said predefined specification (11); and
a software rule parser (13);
wherein said rule parser (13) is adapted to perform a conformity examination by applying said set of rules on content of said configuration (100), thereby enabling automated detection of inconsistencies with said specification (11) prior to deriving a piece of software (7) from said configuration (10).

2. A validator (1) according to claim 1, wherein said validator (1) is adapted to trigger an indication (16) should a parameter restriction expressed by one of the rules not be met during said conformity examination.

3. A validator (1) according to claim 2, wherein said validator (1) furthermore comprises a result interface (15) for providing a conformity result based on an outcome of said conformity examination, said outcome comprising said indication (16).

4. A validator (1) according to any one of the preceding claims, wherein said acquisition interface (8) is adapted to convert an original format of said configuration(10) to an adjusted format (100) suitable for said rule parser (13).

5. A validator (1) according to claim 4, wherein, in said adjusted format, said content (100) is represented by an object structure.

6. A validator (1) according to any one of the preceding claims, wherein said validator (1) furthermore comprises a memory area (9) adapted to store said content (100).

7. A validator (1) according any to one of the preceding claims, wherein said rule parser (13) is based on a business rule management system (BRMS).

8. A validator (1) according to any one of the preceding claims, wherein said predefined specification (11) is based on software and/or hardware conditions defined by a system for which said piece of software (7) is intended.

9. A validator (1) according to claim 8, wherein said system is an automotive system comprising an electronic control unit (ECU) for which said piece of software (7) is intended.

10. A validator (1) according to claim 8 or 9, wherein said system complies with standards based on AUTOSAR (Automotive Open System Architecture).

11. A validator (1) according any one of the preceding claims, wherein said piece of software (7) is a basic software supporting one or a combination of application interfaces, hardware interfaces, drivers, and system, memory and communication services.

12. A method of validating conformity of a software configuration (10, 100) with a predefined specification (11), which method comprises:
obtaining (306) said configuration (10) by means of an acquisition interface (8);
storing (314) a set of predefined rules in a storage (12), which rules are defined (312) by restrictions associated with configuration parameters and dependencies of said parameters derived from said predefined specification (11); and
performing (316) a conformity examination by utilizing a software rule parser (13) to apply said set of rules on content of said configuration (100), thereby enabling automated detection of inconsistencies with said specification (11) prior to deriving a piece of software (7) from said configuration (10).

13. A computer program for performing the steps of claim 12 when the program is executed in a computer.

14. A computer program product comprising a computer readable medium having stored thereon computer program means for validating conformity of a software configuration (10, 100) with a predefined specification (11), comprising:
code for obtaining (306) said configuration (10) by means of an acquisition interface (8);
code for storing (310) a set of predefined rules in a storage (12), which rules are defined (312) by restrictions associated with configuration parameters and dependencies of said parameters derived from said predefined specification (11); and
code for performing (316) a conformity examination by utilizing a software rule parser (13) to apply said set of rules on content of said configuration (100), thereby enabling automated detection of inconsistencies with said specification (11) prior to deriving a piece of software (7) from said configuration (10).
